# EUROPEAN PATENT SPECIFICATION

(11) **EP 1 471 092 B1**
(45) Date of publication and mention of the grant of the patent: **25.10.2006**
(21) Application number: 03008839.7
(22) Date of filing: 25.04.2003
(51) Int. Cl.: C08G 77/448, C08G 63/685, B29B 17/00, B29C 45/16, B32B 5/16, B32B 27/06

(54) **Binder for granulation molding of powder particles and granulated moldings**
Bindemittel zum granulierenden Umformen von pulverförmigen Teilchen und granulierte Formteile
Matériau d' agrégation pour moulage de granulation de particules de poudre et moulages granulés

(43) Date of publication of application: 27.10.2004
(73) Proprietor: Ricoh Company, Ltd., Tokyo 143-8555 (JP); Shinko Frex Inc., Hamamatsu City, Shizuoka Prefecture 433-8116 (JP)
(72) Inventor: Morii, Yoshihiro, Ohta-ku, Tokyo 143-8555 (JP); Souma, Satosu, Ohta-ku, Tokyo 143-8555 (JP); Kishi, Hiroyuki, Ohta-ku, Tokyo 143-8555 (JP); Torii, Kazuma, Hamamatsu City, Shizuoka Pref. 433-8116 (JP); Matsuura, Hiroyuki, Hamamatsu City, Shizuoka Pref. 433-8116 (JP)
(74) Representative: Muschke, Markus Artur Heinz

(56) References cited:
- EP-A- 1 138 714
- US-A1- 2002 031 657
- US-A1- 2002 035 236
- PATENT ABSTRACTS OF JAPAN vol. 2002, no. 11, 6 November 2002 (2002-11-06) & JP 2002 194078 A (MITSUI CHEMICALS INC), 10 July 2002 (2002-07-10)
- PATENT ABSTRACTS OF JAPAN vol. 2002, no. 11, 6 November 2002 (2002-11-06) & JP 2002 194080 A (MITSUI CHEMICALS INC), 10 July 2002 (2002-07-10)
- PATENT ABSTRACTS OF JAPAN vol. 2000, no. 24, 11 May 2001 (2001-05-11) & JP 2001 205748 A (SHARP CORP), 31 July 2001 (2001-07-31)

## Description

### BACKGROUND OF THE INVENTION

### 1) Field of the Invention

The present invention relates to the use of a binder for granulation molding of powder particles of a metal, a metal oxide or a mineral, or a mixture of two or more thereof, and to granulated moldings obtained by granulation molding by using the binder.

### 2) Description of the Related Art

Various steps such as refining and melting are carried out to obtain a desired metal from ores, but at these steps, powder particles are inevitably generated. Reutilization of these powder particles is desired for effective use of resources, and usually these powder particles are reutilized after granulation molding to a certain size for convenience of handling and in consideration of working atmosphere.

For granulation molding, incorporation of a binder is proposed to improve granulation, shape retention and crushing strength. The binder for granulation molding of powder particles includes inorganic materials such as cement and bentonite, polyvinyl alcohol, carboxymethyl cellulose, starch, tar, pitch, and polybasic acids such as dimer acid and trimer acid (disclosed in JP-A No. 2-270920, JP-A No. 3-6334 and JP-A No. 6-200332, respectively).

However, water should be added to inorganic materials such as cement or polyvinyl alcohol and carboxymethyl cellulose, and starch, poor in water resistance, absorbs moisture, and then they react with water in aluminum residues to generate a hydrogen gas and ammonia, and therefore use of such binders is inconvenient.

When a polybasic acid such as dimer acid or trimer acid is used in materials such as aluminum residues, aluminum nitride, aluminum chloride and aluminum carbide contained therein causes chemical reaction from the start of molding, to ignite and burn granulated moldings, thus causing oxidation of aluminum as a reducing component and depriving it of a reducing ability, and thus there is a problem of a deterioration in the commodity value thereof as an additive.

When a polybasic acid such as dimer acid or trimer acid is used not only in aluminum residues but also in other materials, granulated moldings are poor in shape retention, and therefore the amount of fragments after molding is increased thus decreasing the yield of granulation, and the proportion of the additive compounded in powder particles is so high that when granulated moldings are used as an additive in metal refining, the concentration of the refined metal is decreased.

When tar and pitch are used not only in aluminum residues but also in other materials, a large amount of black smoke is generated at the time of addition to melt steel thus deteriorating the working atmosphere.

Phenol-based resin and polyurethane resin are also proposed as the resins (JP-A No. 3-6334), but the phenol-based resin is poor in shape retention, while the polyurethane resin is expensive and should be heated at 180 to 200°C to exhibit its binder effect, thus requiring a special expensive device for heating.

Accordingly, any of these binders have advantages and disadvantages, and at present, they are used by compromise in consideration of its use and costs.

JP 2002-194078 is related to a polymer and its production method. The problem to be solved is to obtain a polymer excellent in biodegradation property and safety, and satisfying various properties required in wide uses. The problem is solved in that the polymer has repeating units consisting of particular amino acids.

JP 2002-194080 is related to the problem of obtaining a polymer excellent in biodegradation property and safety, and satisfying various properties required in wide uses, and to provide a production method for the polymer. The problem is solved in that the polymer has repeating units of particular amino acids.

US 0031657 discloses a resin molding product which is a sandwiched molding product provided with a core layer and a skin layer having at least an electrophotographic toner. Further, it is preferable that the core layer contains an additive resin, which is compatible with a binder resin that is used for the electrophotographic toner and can give an elasticity to the core layer when the additive resin and the binder resin are dissolved with each other. According to the arrangement, it is possible to utilize as a raw material a nonstandard toner, which is produced during a manufacturing process of the electrophotographic toner, but cannot be used as a commercial product, and a discard toner, which has been used in an image forming apparatus of an electrophotographic method, thereby realizing a resin molding product of a high quality at a low cost, while the resin molding product can improve its impact resistance by use of the additive resin.

EP 1 138 714 discloses a polycarbonate resin and an optical article using the same. A polycarbonate resin obtained by reaction of (A) a bisphenol compound having a fluorene structure, (B) a bisphenol compound having a polysiloxane structure, (C) other specific bisphenol compound and a carbonic acid ester-forming compound, wherein an amount of (A) bisphenol compound is 30 to 80 % by weight to total amount of (A) bisphenol compound and (B) bisphenol compound, and an amount of (C) bisphenol compound is 1 to 80 % by weight to total amount of (A) bisphenol compound, (B) bisphenol compound and (C) bisphenol compound, and an intrinsic viscosity of said polycarbonate resin is 0.2 to 1.0 dl/g.

JP2001-205748 relates to a resin molded article and a method of manufacturing the same. The problem to obtain a resin molded article of high quality low in cost by effectively recycling fine powder toner and waste toner generated in a process for manufacturing electrophotographic toner is solved. The problem is solved by a resin molded article having a sandwich structure which is molded by coating a core layer material containing electrophotographic toner constituted of at least a binder resin and a colorant with a skin layer material containing a resin. As the electrophotographic toner, fine powder toner below the product standards generated in a process for manufacturing the electrophotographic toner and waste toner generated accompanied by performing a series of image forming processes by an image forming apparatus are used. A resin having the same system as the bonder resin of the electrophotographic toner of a core layer is used as the skin layer material.

US 0035236 relates to a condensation polymer having at least one carboxylic acid end group connected to an alkylamide group via an ester linkage. The polymer according to the invention may be obtained through reaction of an alkanolamine and a cyclic anhydride after which a polymer is obtained through polycondensation. The polymer can be applied in a powder paint composition.

Typical inorganic powder particles utilized effectively as a flux material for making steel at present are aluminum residues consisting of aluminum dross, aluminum ash or aluminum mineral residues (melt residues) generated at an aluminum refining, secondary refining or melting step, and used as an additive for de-oxidation and desulfurization of melt pig iron, melt steel or steel ingot, residue formation, reduction of FeO in slag, an improvement in fluidity and heat-retention of slag, in procedures of manufacturing pig iron in a blast furnace, in procedures of steel making or casting in an electrical furnace, or in casting procedures, but except for addition by injection, they are subjected to granulation molding with a binder for the convenience of handling. When a water-soluble binder is used, an ammonia gas and hydrogen gas is generated because of the reaction of water with aluminum nitride and metal aluminum contained in aluminum residues, and thus a water-soluble binder based on polybasic acid such as dimer acid is used, but this suffers from a problem of heat evolution.

### SUMMARY OF THE INVENTION

It is an object of the present invention to provide a binder for granulation molding of powder particles that can be used to produce granulated moldings relatively inexpensively without the problems described above and with broader applicability than the conventional one.

It is object of the present invention to provide a binder for granulation molding of aluminum residues that is suitable particularly for granulation molding of aluminum residues, and that can be utilized effectively as an additive for molten pig iron and melt steel to which the granulated moldings are mainly applied at present.

It is still other object of the present invention to effectively reutilize wastes disposed of at present.

The problem is solved by the use according to claim 1 and the granulated molding according to claim 11.

The present invention provides:
1. A binder for granulation molding of powder particles, which is compounded with a resin having a softening point suitable as a binder resin for toners.
2. The binder for granulation molding of powder particles may be compounded with a resin softened by heat generated upon friction compression at the time of granulation molding.
3. The softening point of the binder for granulation molding is 100°C or less.
4. The softening point of the binder for granulation molding may be 60°C or less.
5. The resin may be in the form of finely divided particles.
6. The maximum particle diameter of the resin may be 50 µm or less.
7. The maximum particle diameter of the resin may be 12 µm or less.
8. The maximum particle diameter of the resin may be 5 µm or less.
9. The binder for granulation molding of powder particles may comprise at least one resin selected from the group consisting of polyol resin, polyester resin, a homopolymer of styrene, a homopolymer of a substituted derivative of styrene, a styrene-based copolymer, acrylic resin, methacrylate resin, polyethylene, polypropylene, epoxy resin, silicone resin, polyamide resin, furan resin, xylene resin, polyvinyl butyral, terpene resin, chroman indene resin, diene-based resin, maleic acid resin, polyvinyl chloride, polyvinyl acetate, polyethylene-vinyl acetate resin, and petroleum-based resin.
10. The binder for granulation molding of powder particles may comprise at least one resin selected from the group consisting of polyol resin, styrene-acrylic copolymer, and polyester resin.
11. The binder for granulation molding of powder particles may comprise waste toners as the resin.
12. The binder for granulation molding of powder particles may be used in granulation molding of aluminum powder particles comprising at least one kind of aluminum residues consisting of aluminum dross, aluminum ash or aluminum mineral residues used as a steel-making flux material and generated at an aluminum refining, secondary refining or melting step.
13. A Granulated molding compriseing 1 to 20% by weight of the binder for granulation molding of powder particles according to above item 1 compounded with composite powder particles based on aluminum residues, minerals, or metals.

The other objects, features and advantages of the present invention are specifically set forth in or will become apparent from the following detailed descriptions of the invention when read in conjunction.

### DETAILED DESCRIPTIONS

The present inventors have intensively studied to solve the above problems. As a result, the present inventors have found that when powder particles are granulated and molded adding a binder which includes a particular resin, the obtained granulated moldings have excellent performance of granulation, shape retention and crushing strength, and the granulated moldings do not cause excess heating by chemical reaction. In addition, the present inventors have found that waste toners which are scrapped at present are favorable as the resin, and then applying the waste toners makes the cost of granulation molding inexpensive. Then, the present Inventors have succeeded in developing a binder with broader applicability.

Hereinafter, embodiments of the present invention are described.

### (1) Binder for granulation molding

The binder used according to the present invention is a resin having a softening point suitable as a binder resin for toners. The toners are used widely in electrophotography, electrostatic printing, electrostatic recording and the like, and the binder resin therefor is required to exhibit a good fixing ability, that is, good heat fusion under fixing heating, to render itself low viscous. In fixing, there is a difference in the system, that is, contact fixing and non-contact fixing, and the fixing temperature in the former is lower, and thus the softening point of the binder resin used is lower, but in the present invention, the resin is used as binder for granulation molding of powder particles, that is, the resin is used under compression, and therefore, any binder resins can be used to give preferable results.

At the time of granulation molding, the binder is subjected to friction compression and thus inevitably evolves heat. The resin is preferably the one to be softened by this heat because the necessity for separately arranging a heating unit can be eliminated.

From the viewpoint described above, a resin having a softening point of 100° C or less, preferably 60°C or less is compounded, because the resin is heated to about 60°C upon friction compression.

When the resin is in the form of finely divided particles, the surface area of the resin, relative to the total volume, is large. Accordingly, the frictional area is increased thereby increasing the efficiency of friction compression, to improve thermal conductivity and fluidity, resulting in an increase in binder reactivity, and therefore, the finely divided particles are preferably used.

From the viewpoint described above, a resin having a maximum particle diameter of 50 µm or less is preferably compounded, and a smaller diameter is more preferable.

The binder may be compounded with other components in such an extent that the function of the binder is not deteriorated, and in a usual mode, the content of the resin is 50% or more by weight.

Examples of the resin which can satisfy the above conditions include polyol resin, styrene-acrylic copolymer, polyester resin, styrene resin and epoxy resin.

More preferable examples of the resin are polyol resin, styrene-acrylic copolymer and polyester resin. Hereinafter, these 3 types of resins are described in more detail.

The polyol resin is a resin produced by modifying epoxy resin, and various known polyol resins can be used.

By way of example, the polyol resin (1) includes compounds obtained by reacting epoxy resin, a divalent phenol-alkylene oxide adduct or a glycidyl ether thereof, and a compound having, in the molecule, 2 or more active hydrogens reacting with epoxy groups.

The epoxy resin includes, for example, products obtained by condensating bisphenol such as bisphenol A and bisphenol F with epichlorohydrin.

The divalent phenol-alkylene oxide adduct includes reaction products of alkylene oxide such as ethylene oxide, propylene oxide or butylene oxide or a mixture thereof with a divalent phenol, for example bisphenol such as bisphenol A or bisphenol F. The glycidyl ether includes, for example, products produced by glycidylating the adduct with epichlorohydrin or β-methyl epichlorohydrin. Preferable examples include diglycidyl ethers of bisphenol A-alkylene oxide adducts represented by the formula: 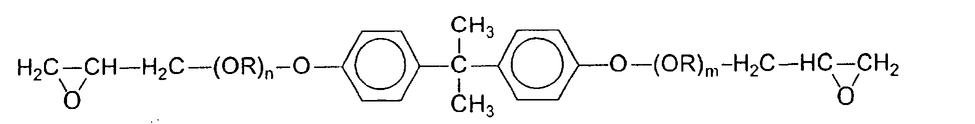 wherein R represents either one of

―CH₂―CH₂―

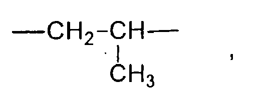

―CH₂-CH₂-CH₂―

each of n and m is 1 or more and each represents the number of repeating units, and satisfies the equation n + m = 2 to 6.

The compound having, in the molecule, 2 or more active hydrogens reacting with epoxy groups includes, for example, phenols, polyvalent phenols and polycarboxylic acids. The divalent phenols include bisphenols such as bisphenol A and bisphenol F; the polyvalent phenols include o-cresol novolaks, phenol novolaks, tris(4-hydroxydiphenyl) methane and 1-[α-methyl-α-(4-hydroxydiphenyl)ethyl]benzene; and the polyvalent carboxylic acids include malonic acid, succinic acid, glutaric acid, adipic acid, maleic acid, fumaric acid, phthalic acid, terephthalic acid, trimellitic acid and trimellitic anhydride.

The polyol resin (1)' includes those obtained by inactivating the terminals of polyol resin by reacting a compound having 1 active hydrogen reacting with an epoxy group (for example, monovalent phenols such as phenol, cresol, isopropyl phenol, amyl phenol, nonyl phenol, dodecyl phenol, xylenol and p-cumyl phenol, secondary amines such as diethylamine, dipropylamine, dibutylamine, N-methyl(ethyl)piperazine and piperidine, and carboxylic acids such as propionic acid and caproic acid) allowed to be present during the reaction of the epoxy resin and the like or by adding and reacting the compound after the reaction.

Examples of other polyol resin (2) include those obtained by esterifying a secondary hydroxyl group of epoxy resin.

The esterifying agent used includes C₃₋₂₅ monocarboxylic acids (for example, C₆₋₂₀ monocarboxylic acids such as propionic acid, capric acid, lauric acid, myristic acid, palmitic acid, stearic acid, acrylic acid, oleic acid, margarine acid, arachic acid, linolic acid, linoleic acid, castor oil fatty acid, and toll oil fatty acid), monovalent carboxylate derivatives (for example, lower alkyl carboxylates such as methyl and ethyl carboxylates), lactones (for example, β-propiolactone, γ-butyrolactone, δ-valerolactone, ε-caprolactone, β-butyrolactone and γ-valerolactone).

Further, the polyol resin (2)' includes those whose terminals have been inactivated by reacting a compound having 1 active hydrogen reacting with an epoxy group (for example, C₆₋₄₀ monovalent phenols such as phenol, cresol, isopropyl phenol, amyl phenol, nonyl phenol, dodecyl phenol, xylenol and p-cumyl phenol and C₆₋₂₅ monovalent carboxylic acids such as acetic acid, propionic acid, capric acid, lauric acid, myristic acid, palmitic acid, stearic acid, acrylic acid, oleic acid, margarine acid, arachic acid, linolic acid, linoleic acid, castor oil fatty acid, and toll oil fatty acid).

The styrene-acrylic copolymer is obtained by copolymerizing or partially crosslinking a styrene monomer with acrylate or methacrylate, and various known styrene-acrylic copolymers can be used.

The styrene monomer includes, for example, styrene, α-methylstyrene, o-methylstyrene, m-methylstyrene, p-methylstyrene, 2,4-dimethylstyrene, 3,4-dimethylstyrene and the like.

The acrylate includes, for example, ethyl acrylate, methyl acrylate, propyl acrylate, n-butyl acrylate, isobutyl acrylate, dodecyl acrylate, 2-ethylhexyl acrylate, methacrylic acid, ethyl methacrylate, methyl methacrylate, propyl methacrylate, n-butyl methacrylate, isobutyl methacrylate, dodecyl methacrylate, and 2-ethylhexyl methacrylate.

The styrene-acrylic copolymer includes, for example, a styrene-acrylic copolymer, styrene-methyl methacrylate copolymer, styrene-n-butyl acrylate copolymer, styrene-butyl methacrylate copolymer, styrene-diethylaminoethyl methacrylate copolymer, styrene-methyl methacrylate-n-butyl acrylate copolymer, styrene-methyl methacrylate-butyl acrylate-N-(ethoxymethyl) acrylamide copolymer, styrene-glycidyl methacrylate copolymer, styrene-dimethylaminoethyl methacrylate copolymer, styrene-diethylaminoethyl methacrylate copolymer, styrene-butadiene-acrylate copolymer, styrene-butadiene copolymer, styrene-butadiene-chlorinated paraffin copolymer, styrene-butadiene-dimethylaminoethyl methacrylate copolymer, styrene-acrylate-maleate copolymer, styrene-n-butyl acrylate-2-ethylhexyl acrylate copolymer, styrene-methyl methacrylate-2-ethylhexyl acrylate copolymer, styrene-n-butyl acrylate-ethylglycol methacrylate copolymer, and styrene-n-butyl methacrylate-acrylic acid copolymer.

As the polyester resin, various known polyester resins obtained by polycondensation reaction of an alcohol with an acid can be used.

The alcohol includes, for example, diols such as polyethylene glycol, diethylene glycol, triethylene glycol, 1,2-propylene glycol, 1,3-propylene glycol, 1,4-propylene glycol, neopentyl glycol and 1,4-butene diol, etherified bisphenols such as 1,4-bis(hydroxymethyl)cyclohexane, bisphenol A, hydrogenated bisphenol A, polyoxyethylene bisphenol A, polyoxypropylene bisphenol A, divalent alcohol monomers derived from these bisphenols by substitution with C₃₋₂₂ saturated or unsaturated hydrocarbon groups, other divalent alcohol monomers, and polyvalent (trivalent or more) alcohol monomers such as sorbitol, 1,2,3,6-hexatetrol, 1,4-sorbitan, pentaerythritol, dipentaerythritol, tripentaerythritol, sucrose, 1,2,4-butanetriol, 1,2,5-pentanetriol, glycerol, 2-methylpropanetriol, 2-methyl-1,2,4-butanetriol, trimethylolethane, trimethylolpropane and 1,3,5-trihydroxymethylbenzne.

The carboxylic acid includes, for example, monocarboxylic acids such as palmitic acid, stearic acid and oleic acid, maleic acid, fumaric acid, mesaconic acid, citraconic acid, terephthalic acid, cyclohexane dicarboxylic acid, succinic acid, adipic acid, sebacic acid, malonic acid, divalent organic acid monomers derived from these acids by substitution with C₃₋₂₂ saturated or unsaturated hydrocarbon groups, acid anhydrides thereof, a dimer of lower alkyl ester and linoleic acid, 1,2,4-benzenetricarboxylic acid, 1,2,5-benzenetricarboxylic acid, 2,5,7-naphthalenetricarboxylic acid, 1,2,4-naphthalenetricarboxylic acid, 1,2,4-butanetricarboxylic acid, 1,2,5-hexanetricarboxylic acid, 1,3-dicarboxyl-2-methyl-2-methylene carboxypropane, tetra(methylenecarboxyl) methane, 1,2,7,8-octanetracarboxylic acid, and polyvalent (trivalent or more) acid monomer such as anhydrides thereof.

As the polyester resin, various known polyester resins obtained by polycondensation reaction of a polyol with a polycarboxylic acid can also be used.

The polyol includes, for example, ethylene glycol, propyelene glycol, 1,3-butanediol, 1,4-butanediol, 2,3-butanediol, diethylene glycol, triethylene glycol, 1,5-butanediol, 1,6-hexanediol, neopentyl glycol, cyclohexane dimethanol, hydrogenated bisphenol A, bisphenol A-ethylene oxide adduct, and bisphenol A-propylene oxide adduct.

The polyester resin includes crystalline polyester having a crosslinked structure by an unsaturated site (unsaturated bonds), that is, crosslinked crystalline polyester. The crosslinked crystalline polyester has an unsaturated site of unsaturated double bonds and is obtained by condensation reaction of a mixture of a divalent or more unsaturated carboxylic acid and a divalent or more saturated carboxylic acid with a divalent or more alcohol.

In addition, the polyester resin includes a non-linear polyester resin comprising 3 to 15 mol-% polyvalent (trivalent or more) carboxylic acid monomer unit, 5 to 30 mol-% polyvalent carboxylic acid monomer unit and/or polyvalent alcohol monomer unit (soft segment component) having a C₅₋₃₀ saturated or unsaturated aliphatic hydrocarbon group, the balance being a divalent acid component, a divalent alcohol component and the like.

Further preferably used are resins conventionally used as binder resin for toners, for example homopolymers of styrene and substituted derivatives, such as polystyrene, poly-p-chlorostyrene and polyvinyl toluene, polystyrene-based copolymers other than those described above, for example styrene-butadiene copolymer, styrene-acrylonitrile copolymer and styrene-maleic anhydride copolymer, and acrylic resin, methacrylate resin, polyethylene, polypropylene, epoxy resin, silicone resin, polyamide resin, furan resin, xylene resin, polyvinyl butyral, terpene resin, chroman indene resin, diene-based resin, maleic acid resin, polyvinyl chloride, polyvinyl acetate, polyethylene-vinyl acetate resin, and petroleum-based resin.

Any of these resins are positively used as binder resin for toners in electrophotography, electrostatic printing, electrostatic recording and the like.

At present, electrophotographic products and the like are recovered by manufactures, and toners contained in the products are also recovered. Accordingly, the used toners conventionally disposed of after recovery are also preferable as the resin to be incorporated into the binder of the present invention.

The toners are composed inherently of finely divided particles, and the maximum particle diameter of toners from any manufactures is about 12 µm. However, the used toners wear out by impact and friction in products during use, and thus have smaller diameters by about several µm than those of initially used toners. Accordingly, the recovered waste toners have improvements in thermal conductivity and fluidity, and are thus more preferable as the resin to be incorporated into the binder of the present invention.

Other than the above, toners discharged from factories can be utilized as the resin to be incorporated into the binder of the present invention.

In electrophotography, the electrophotographic process consisting of various steps such as electrification, light exposure, development, transfer, separation and fixation is complicated, and a too small toner diameter causes drawbacks in the process and brings about problems in products. To improve the process, toners having a particle diameter of 5 µm or less, produced in factories, are not marketed. Conventionally, such unused toners discharged from factories are disposed of. There is no necessity for disposal of toners having a maximum particle diameter of 12 µm or more because their diameter can be reduced by means such as milling in factories that is a major step in the process of producing toners.

Accordingly, it can be said that waste toners discharged from factories have smaller particle diameters than those of usual toners and are thus very excellent in thermal conductivity and in fluidity and most preferable as the resin to be incorporated into the binder of the present invention.

Accordingly, utilization of the waste toners as the binder is advantageous because pretreatment such as milling is not necessary before granulation molding.

A coloring matter and other additives contained in the toners will not deteriorate the function of the toners as the binder of the present invention.

### (2) Powder particles for granulation molding

The powder particles in the present invention are intended to be those of a metal, metal oxide or mineral generated at various steps such as refining and melting carried out to obtain a desired metal from ores, but the powder particles in this invention are not limited thereto, and encompasses powder particles milled for reutilization of wastes.

The binder of the present invention does not react with metal aluminum or aluminum compounds such as aluminum nitride, aluminum chloride and aluminum carbide, is excellent in moldability, and unlike tar or pitch, does not deteriorate the working atmosphere after addition to melt pig iron or melt steel, and the present binder is thus preferable in granulation molding using, as steel-making flux, aluminum-based powder particles containing aluminum residues consisting of aluminum dross, aluminum ash or aluminum mineral residues generated at the aluminum refining, secondary refining and melting steps.

Recently, composite flux having components (MgO.CaO.SiO₂.Al₂O₃) and basicity (CaO/SiO₂) regulated by compounding minerals such as lime, silicate carbide, fluorite, dolomite and lightly burned magnesia with aluminum residues is also produced as steel-making flux for complex chemical reactions, and as a matter of course, the binder of the present invention is suitable for granulation molding of such composite flux.

### (3) Amount of the binder compounded

The binder is compounded preferably in an amount of 1 to 20% by weight (in terms of solids content) relative to the total amount (100% by weight) of powder particles and the binder. This is because if the amount is less than 1% by weight, a satisfactory binder effect is not demonstrated, but given 20% by weight or less, a sufficient binder effect can be achieved.

### (4) Granulation molding method

Granulated moldings are obtained in a usual manner in any forms such as particles, pellets and briquettes, depending on use.

To prepare flux for manufacture of pig iron or steel, the binder and powder particles are kneaded, granulated and molded with a pelletizer or a low-pressure briquetting machine for wet manufacture of steel or with a high-pressure briquetting machine or a rotary press machine for dry molding, among which the high-pressure briquetting machine or the rotary press machine for dry molding are used preferably for preventing a loss of metal aluminum due to the reaction of water with metal aluminum as a reducing component in steel-making flux and for preventing evolution of ammonia gas due to the reaction of water with aluminum nitride contained in aluminum residues. The high-pressure briquetting machine can achieve higher productivity than by the rotary press machine, and can control production costs, and therefore, the high-pressure briquetting machine is used in many cases in actual operation.

In usual operation, the roll pressure in the high-pressure briquetting machine is 10 to 20 tons/cm², and thus the roll temperature is raised to 60 to 80°C even if a special heating device is not arranged. The resin of the present invention is confirmed to achieve a binding effect at 30°C or more and a practical binding effect at 60°C or more at the above-mentioned pressure. Accordingly, subsequent heat treatment can be omitted by utilizing the molding heat at the time of molding.

When a heating device is used, the upper limit of the temperature is predetermined at 200°C or less to prevent gasification of the resin.

### EXAMPLES

Hereinafter, the present invention is described in more detail with reference to the Examples.

### Example 1. Confirmation of binder effect at different heating temperatures

Aluminum ash (metal aluminum: 50% by weight) generated in secondary refining of aluminum was used as the inorganic powder particles.

As the binder for granulation molding, a mixture of 100 g bisphenol A type liquid epoxy resin, 45.26 g bisphenol A, 30.9 g p-cumyl phenol and 20 g xylene was heated to 70°C in a nitrogen atmosphere, and lithium chloride, 0.032 g/H₂O, was added thereto, and the mixture was reacted at 150 to 180°C for 4 to 7 hours, to give a modified epoxy polyol resin having a softening point of 100°C and a Tg of 56°C. This product was finely pulverized such that the maximum particle diameter was reduced to 12 µm or less, in order to improve the reactivity thereof as the binder.

The binder was incorporated in various proportions into the aluminum ash, granulated and molded into cylindrical samples (diameter, 28 mm; thickness, 8 mm) by a hand press machine [SSP-10A (not evolving molding heat), manufactured by Shimadzu Corporation], heated to a predetermined temperature in an electrical furnace, then removed, left and cooled.

There was a difference in the granulating ability between the aluminum ash with or without at least 1% by weight binder, and the aluminum ash with at least 1 % by weight binder was excellent in releasability from the molding, thus confirming its lubricant effect.

Further, the sample just after cooled to room temperature was measured for crushing strength by a tensile compression testing machine [SV-2000-0 (Imai Seisakusho Co., Ltd.)]. The results are shown in Table 1. From these results, it was confirmed that the crushing strength is significantly increased by heating, and the molding heat generated in dry high-pressure molding can be utilized.

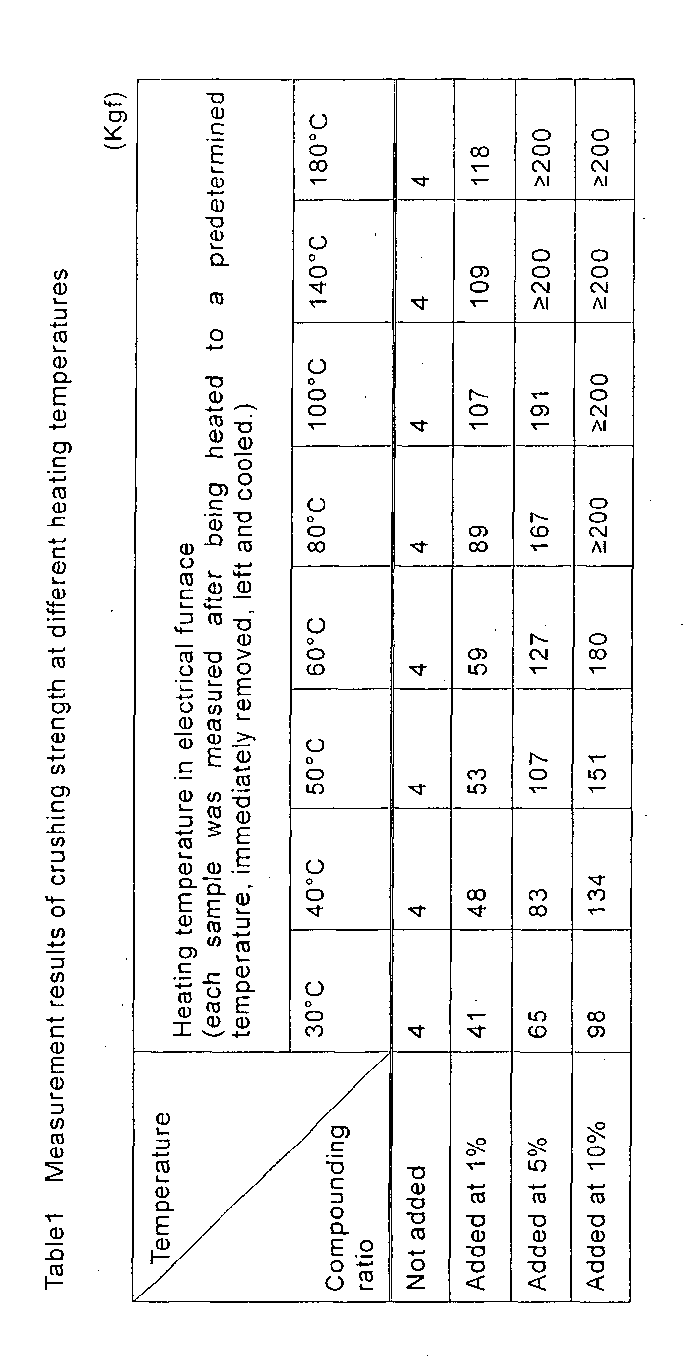

### Example 2. Confirmation of granulating ability and binder effect by the resin added in different amounts

To confirm the granulating ability and binder effect adapted to an actual production process with a machine, the same aluminum ash and binder as in the Example 1 were granulated and molded with a small testing machine ([briquetting machine BSC-25 (not evolving molding heat), manufactured by Shintokogio, Ltd.), to form granulated moldings in a hard-tack form of 20 mm in width, 25 mm in length and 25 mm in thickness.

The granulated moldings were sifted with a screen having a 3 mm mesh size, and as a result, there was a difference in the granulated molding and powder particle distribution ratio among the aluminum ashes with or without the resin compound, thus confirming an improvement in the granulating ability.

The crushing strength was measured in the same manner as in the Example 1. The measured strength was higher in proportion to the amount of the binder added and the heating temperature, thus confirming its binder effect.

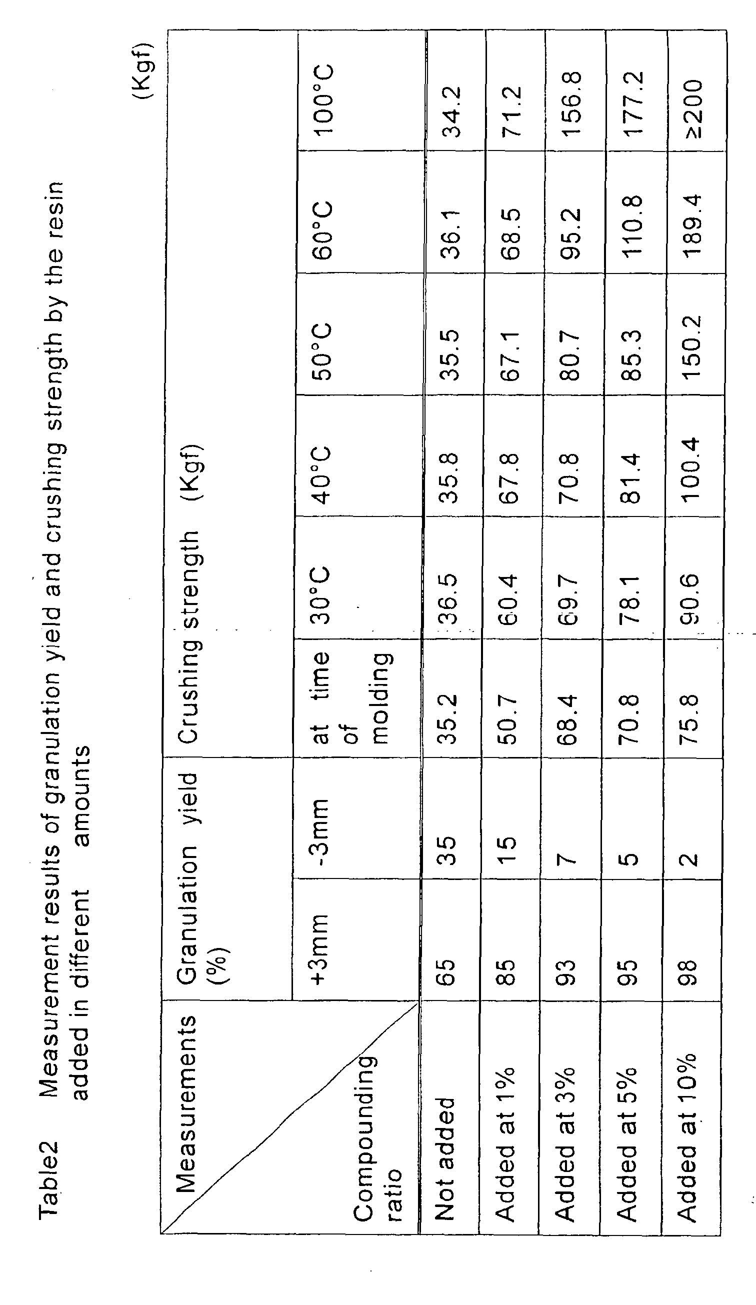

### Example 3. Confirmation of binder effect in a machine

To confirm the binder effect in a machine, the same aluminum ash as in the Example 1 and binders (the same polyol resin as in the Example 1), were compounded such that the ratio of the binder was 5% by weight, and then granulated and molded in production facilities having material-receiving hoppers (10 m³ x 5), a mixing machine (10 m³), a mixed material-storing hopper (5 m³) and a molding machine (high-pressure briquetting machine that can granulate at a ratio of 3 to 5 tons/hour, manufactured by Shintokogio, Ltd.) arranged in line, to prepare 12 ton products in total (1 flexible container bag/ton).

In the case of a granulating machine in production line, the temperature of the molding roll was varied depending on molding pressure, but was usually in the temperature range of 60 to 100°C, and the temperature just after molding of granulated moldings was 40 to 80° C.

The granulating ability and crushing strength were measured in the same manner as in the Example 2. Both the measured granulating ability and crushing strength were higher in proportion to the amount of the binder added, to confirm its binder effect also excellent in a change with time.

The crushing strength in Table 3 is the average of 100 samples sampled at random from an upper part of 12 flexible container bags.

The crushing strength in Table 4 is the average of 100 samples different from those in Table 3 and sampled at random from an upper part of 12 flexible container bags.

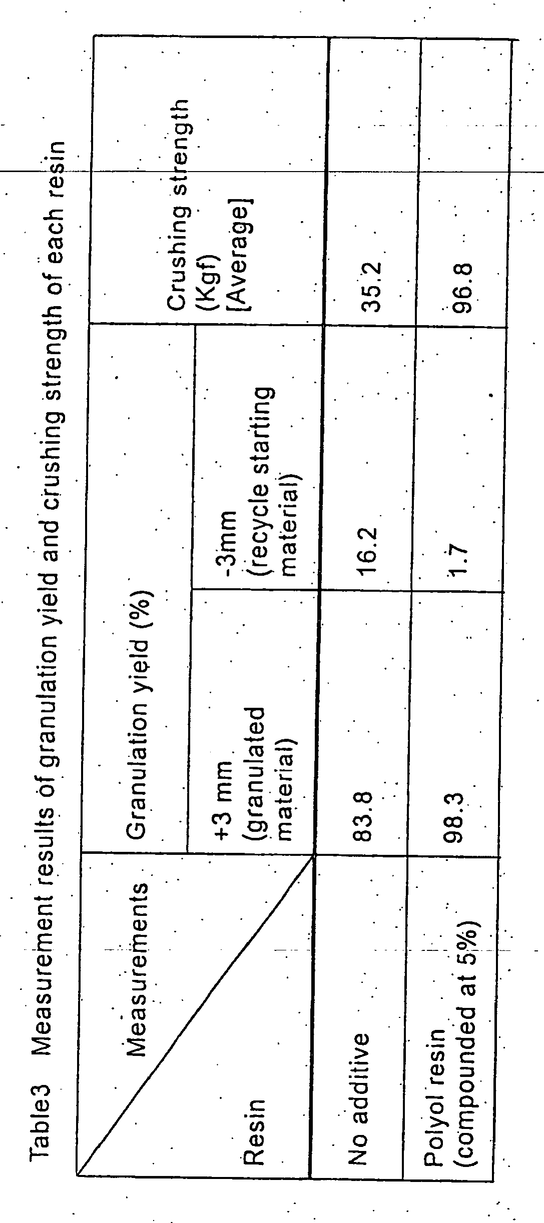

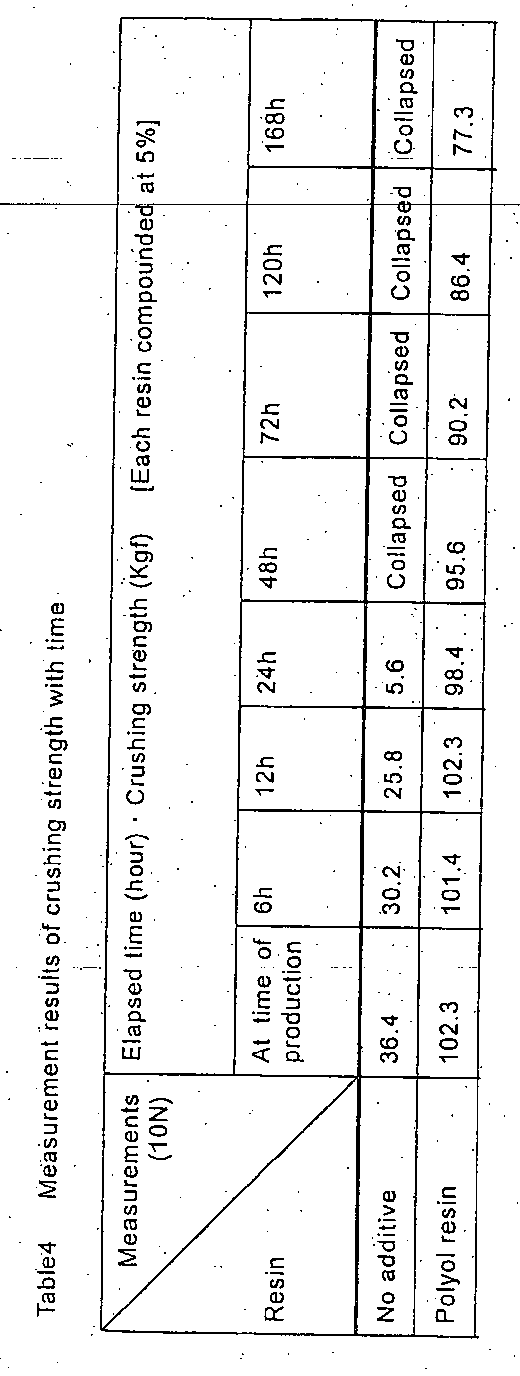

### Example 4. Confirmation of evaluation of steel-making flux by using a production line

For confirmation of evaluation of steel-making flux by using a production line, the following compounding materials were prepared.

Starting composition : 70% by weight of aluminum ash (5,600 kg) containing 50% by weight of metal aluminum, 22% by weight of lightly burned magnesia (1,760 kg), 5% by weight of a commercially available briquetting binder (400 kg) pulverized to an average particle diameter of 10 µm or less, using a polybasic acid such as dimer acid, trimer acid, acrylated fatty acid and maleated fatty acid, and 3% by weight of slaked lime (240 kg) to be compounded according to manufacture's instructions were mixed and compounded in a ratio of 8 tons/lot.

Comparative starting composition: 75% by weight of aluminum ash (6,000 kg) containing 50% by weight of metal aluminum and 25% by weight of lightly burned magnesia (2,000 kg) were mixed and compounded in a ratio of 8 tons/lot.

Each composition was granulated and molded in a briquetting machine in a dry high-pressure molding system at a material-feed rate of 2 tons/hour. The roll molding temperature was 80°C, and the temperature just after molding of granulated moldings was 60° C.

The output (per hour) of 10 mm or more granulated moldings to be formed into granulated articles and the amount of the articles produced were an output of 1,900 kg/hour and articles of 7,800 kg [97.50% by weight] for the starting composition, and an output of 1,800 kg/hour and articles of 7,300 kg [91.25% by weight] for the comparative starting composition, thus confirming its binder effect effective in productivity.

In the reaction with time of granulated moldings, there are a few cases that a briquetting binder comprising a polybasic acid such as dimer acid, trimer acid, acrylated fatty acid and maleated fatty acid, used generally in manufactures of steel-making flux, initiates exothermic reaction in a material based on aluminum ash at the start of granulation molding, to cause ignition and combustion leading to fires, and therefore, the exothermic reaction, along with crushing strength, were measured to obtain data.

Granulated moldings of the comparative starting composition were free of exothermic reaction, but were poor in crushing strength and collapsed with time due to swelling, and could thus not be evaluated as articles.

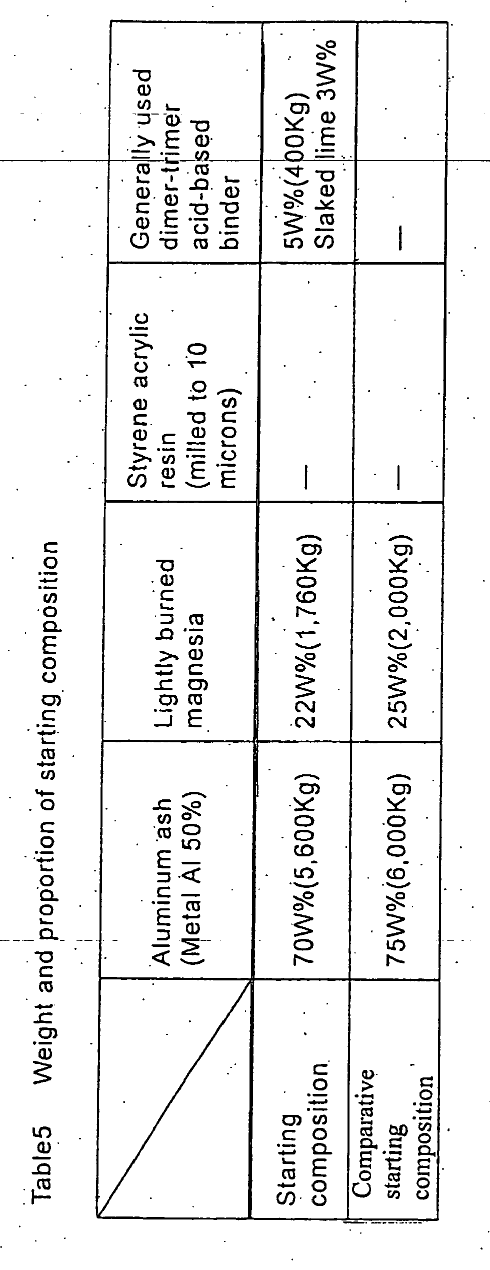

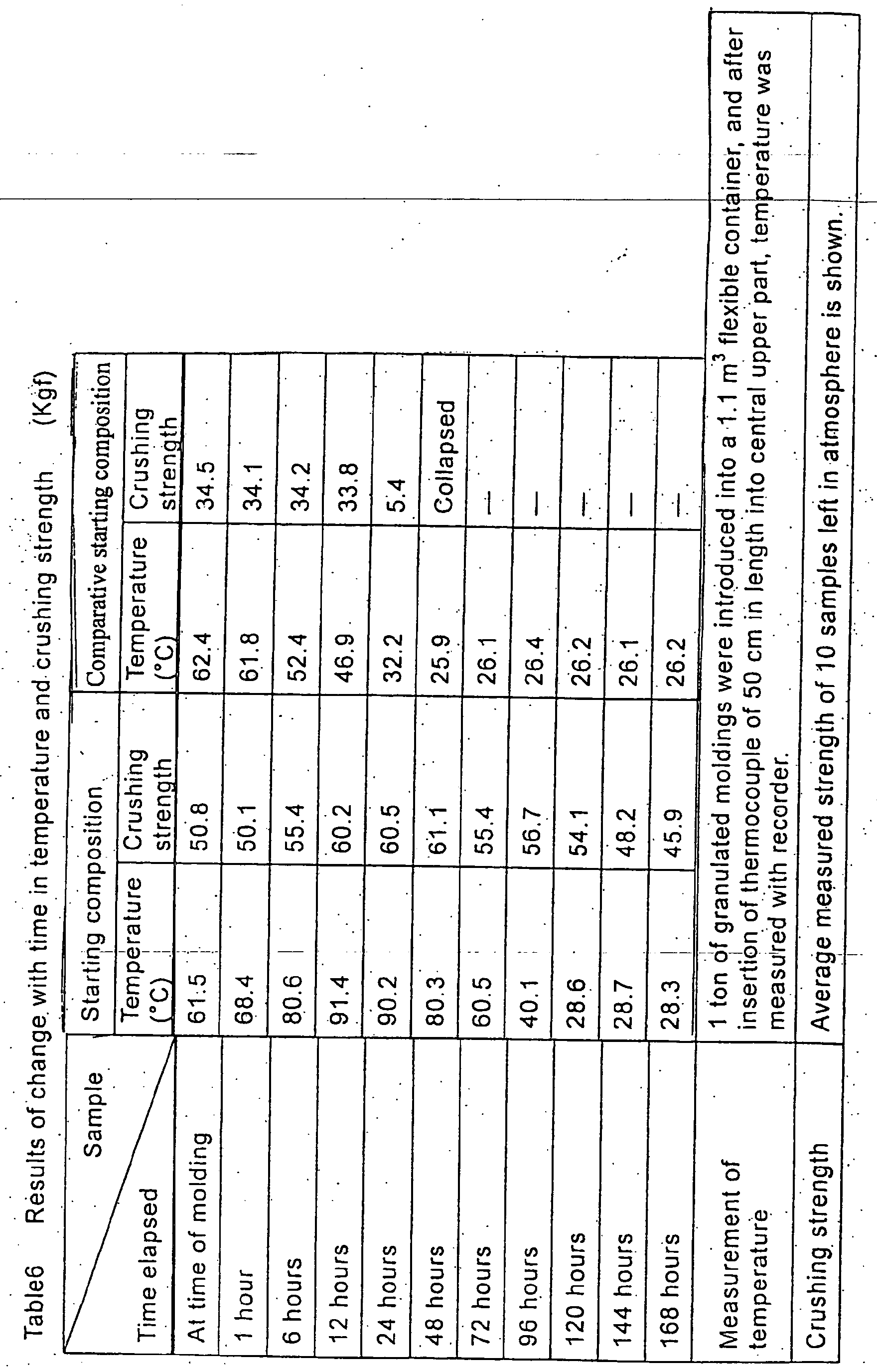

The granulated moldings were excellent in water resistance and did not show a moisture absorption action as exhibited by starch.

### Example 5. Confirmation of the binder effect of waste toners

The present inventors attracted their attention to the fact that components of waste toners (with a maximum particle diameter of 12 µm or less) are composite resins of styrene-acrylic copolymer, polyester resin, polyol resin, organic acid salts and the like, and conducted the same test in the same manner as in the fourth example except that waste toners were compounded and granulated and molded as the binder such that its resin components were identical with those of the binder resin in the fourth example. As described above, the binder of the present invention can be used in granulation molding of powder particles to give safe moldings having high crushing strength and superior in change with time.

The binder of the present invention does not require addition of water and is excellent in water resistance, and is thus suitable for granulation molding of aluminum residues and the like.

It is required at present to positively address creation of a recycling society, and the present invention can utilize waste toners regarded as industrial waste, thus contributing to creation of a recycling society.

The waste toners are conventionally disposed of, but the costs for disposal are high, and the place for disposal of the waste toners is hardly found. Accordingly, the present invention is very useful in that utilization of the waste toners can eliminate the costs and labor for disposal, and the costs of the starting material of the binder can be reduced to nearly 0, thus significantly reducing the costs of the product.

Although the invention has been described with respect to a specific embodiment for a complete and clear disclosure, the appended claims are not to be thus limited but are to be construed as embodying all modifications and alternative constructions that may occur to one skilled in the art which fairly fall within the basic teaching herein set forth.

## Claims

1. The use of a binder for granulation molding of powder particles, based on aluminum metal, aluminum nitride, aluminum chloride, aluminum carbide or aluminum-based powder particles containing aluminum residues consisting of aluminum dross, aluminum ash or aluminum mineral residues,
which binder includes a resin having a softening point of 100°C or less, said resin being from the group consisting of polyol resin, acrylic resin, methacrylate resin, polyamide resin, furan resin, terpene resin, chroman indene resin, diene-based resin, polyvinyl acetate, polyethylene-vinyl acetate resin, and petroleum-based resin and mixtures thereof.

2. The use of a binder for granulation molding of powder particles according to claim 1, which binder is compounded with a resin softened by heat generated upon friction compression at the time of granulation molding.

3. The use of a binder for granulation molding according to claim 1, wherein the softening point is 60 °C or less.

4. The use of a binder for granulation molding according to claim 1, wherein the resin is in the form of finely divided particles.

5. The use of a binder for granulation molding according to claim 4, wherein the maximum particle diameter of the resin is 50 µm or less.

6. The use of a binder for granulation molding according to claim 5, wherein the maximum particle diameter of the resin is 12 µm or less.

7. The use of a binder for granulation molding according to claim 6, wherein the maximum particle diameter of the resin is 5 µm or less.

8. The use of a binder for granulation molding of powder particles according to claim 1, which comprises at least one resin selected from the group consisting of polyol resin, styrene-acrylic copolymer, and polyester resin.

9. The use of a binder for granulation molding of powder particles according to claim 1, which binder comprises waste toners as the resin.

10. The use of the binder for granulation molding of powder particles according to claim 1, in the granulation molding of aluminum powder particles comprising at least one kind of aluminum residues consisting of aluminum dross, aluminum ash or aluminum mineral residues generated at an aluminum refining, secondary refining or melting step and used as a steel-making flux material

11. A Granulated molding comprising 1 to 20 % by weight of the binder according to claim 1, and compounded with composite powder particles.

## Patentansprüche

1. Verwendung eines Bindemittels zum granulierenden Umformen von Pulverteilchen, basierend auf Aluminiummetall, Aluminiumnitrid, Aluminiumchlorid, Aluminiumcarbid oder auf Aluminium basierenden Pulverteilchen enthaltend Aluminiumreste, bestehend aus Aluminiumschlacke, Aluminiumasche oder mineralischen Aluminiumresten, wobei das Bindemittel ein Harz mit einem Erweichungspunkt von 100°C oder weniger aufweist, wobei das Harz ausgewählt ist aus der Gruppe, bestehend aus Polyolharz, Acrylharz, Methacrylatharz, Polyamidharz, Furanharz, Terpenharz, Chromanindenharz, auf Dien basierendem Harz, Polyvinylacetat, Polyethylen-Vinylacetatharz und auf Erdöl basierendem Harz sowie Mischungen davon.

2. Verwendung eines Bindemittels zum granulierenden Umformen von Pulverteilchen nach Anspruch 1, wobei das Bindemittel mit einem Harz verbunden wird, das durch die bei der Reibungsverdichtung während dem granulierenden Umformen entstehende Wärme erweicht wird.

3. Verwendung eines Bindemittels zum granulierenden Umformen von Pulverteilchen nach Anspruch 1, worin der Erweichungspunkt 60°C oder weniger beträgt.

4. Verwendung eines Bindemittels zum granulierenden Umformen nach Anspruch 1, worin das Harz in der Form fein geteilter Teilchen vorliegt.

5. Verwendung eines Bindemittels zum granulierenden Umformen nach Anspruch 4, worin der maximale Teilchendurchmesser des Harzes 50 µm oder weniger beträgt.

6. Verwendung eines Bindemittels zum granulierenden Umformen nach Anspruch 5, worin der maximale Teilchendurchmesser des Harzes 12 µm oder weniger beträgt.

7. Verwendung eines Bindemittels zum granulierenden Umformen nach Anspruch 6, worin der maximale Teilchendurchmesser des Harzes 5 µm oder weniger beträgt.

8. Verwendung eines Bindemittels zum granulierenden Umformen von Pulverteilchen nach Anspruch 1, umfassend mindestens ein Harz ausgewählt aus der Gruppe, bestehend aus Polyolharz, Styrol-Acrylkopolymer und Polyesterharz.

9. Verwendung eines Bindemittels zum granulierenden Umformen von Pulverteilchen nach Anspruch 1, wobei das Bindemittel Abfalltoner als das Harz umfasst.

10. Verwendung eines Bindemittels zum granulierenden Umformen von Pulverteilchen nach Anspruch 1, bei dem granulierenden Umformen von Aluminiumpulverteilchen, umfassend mindestens eine Sorte Aluminiumreste, bestehend aus Aluminiumschlacke, Aluminiumasche oder mineralischen Aluminiumresten, die bei einem Aluminiumaufarbeitungs-, sekundären Aufarbeitungs- oder Schmelz-Schritt entstanden sind und als Flussmittel bei der Stahlherstellung verwendet werden.

11. Granulierte Formteile umfassend 1 bis 20 Gewichtsprozent des Bindemittels nach Anspruch 1 und mit zusammengesetzten Pulverteilchen verbunden.

## Revendications

1. Utilisation d'un matériau d'agrégation pour le moulage de granulation de particules de poudre, sur la base de particules de poudre à base d'aluminium métallique, de nitrure d'aluminium, de chlorure d'aluminium, de carbure d'aluminium ou d'aluminium contenant des résidus d'aluminium constitués par des scories d'aluminium, des cendres d'aluminium ou des résidus minéraux d'aluminium,
ledit matériau d'agrégation comprenant une résine ayant un point de ramollissement de 100 °C ou moins, ladite résine faisant partie du groupe constitué par la résine de polyol, la résine acrylique, la résine méthacrylate, la résine polyamide, la résine de furanne, la résine terpène, la résine d'indène et de chromane, la résine à base de diènes, l'acétate de polyvinyle, la résine de polyéthylène et d'acétate de vinyle, et la résine à base de pétrole et des mélanges de celles-ci.

2. Utilisation d'un matériau d'agrégation pour le moulage de granulation de particules de poudre selon la revendication 1, ledit matériau d'agrégation étant mélangé avec une résine ramollie par la chaleur générée par compression friction au moment du moulage de granulation.

3. Utilisation d'un matériau d'agrégation pour le moulage de granulation selon la revendication 1, dans laquelle le point de ramollissement est de 60 °C ou moins.

4. Utilisation d'un matériau d'agrégation pour le moulage de granulation selon la revendication 1, dans laquelle la résine se présente sous la forme de particules finement divisées.

5. Utilisation d'un matériau d'agrégation pour le moulage de granulation selon la revendication 4, dans laquelle le diamètre maximum des particules de la résine est de 50 µm ou moins.

6. Utilisation d'un matériau d'agrégation pour le moulage de granulation selon la revendication 5, dans laquelle le diamètre maximum des particules de la résine est de 12 µm ou moins.

7. Utilisation d'un matériau d'agrégation pour le moulage de granulation selon la revendication 6, dans laquelle le diamètre maximum des particules de la résine est de 5 µm ou moins.

8. Utilisation d'un matériau d'agrégation pour le moulage de granulation de particules de poudre selon la revendication 1, qui comprend au moins une résine choisie dans le groupe constitué par la résine de polyol, un copolymère de styrène et d'acrylique et une résine polyester.

9. Utilisation d'un matériau d'agrégation pour le moulage de granulation de particules de poudre selon la revendication 1, ledit matériau d'agrégation comprenant des déchets d'encre en poudre comme résine.

10. Utilisation d'un matériau d'agrégation pour le moulage de granulation de particules de poudre selon la revendication 1, dans le moulage de granulation de particules de poudre d'aluminium comprenant au moins une sorte de résidus d'aluminium constitués par des scories d'aluminium, des cendres d'aluminium ou des résidus minéraux d'aluminium générés au niveau d'une étape de raffinage de l'aluminium, de raffinage secondaire de l'aluminium ou de fonte de l'aluminium et utilisés comme fondants dans l'aciérie.

11. Moulages granulés comprenant 1 à 20 % en poids du matériau d'agrégation selon la revendication 1, et mélangés avec des particules de poudre composites.
